# EUROPÄISCHE PATENTSCHRIFT

(11) **EP 0 786 402 B1**
(45) Veröffentlichungstag und Bekanntmachung des Hinweises auf die Patenterteilung: **16.08.2000**
(21) Anmeldenummer: 97100839.6
(22) Anmeldetag: 21.01.1997
(51) Int. Cl.: B63H 5/10, B63H 23/24

(54) **Gondelpropelleranlage**
Propeller unit in a gondola
Unité de propulsion dans une nacelle

(30) Priorität: 23.01.1996 DE 19602276; 30.08.1996 DE 19637146
(43) Veröffentlichungstag der Anmeldung: 30.07.1997
(73) Patentinhaber: Kranert, Holger, 22559 Hamburg (DE)
(72) Erfinder: Kranert, Holger, 22559 Hamburg (DE)
(74) Vertreter: Niedmers, Ole, Dipl.-Phys.

(56) Entgegenhaltungen:
- DE-B- 1 248 503
- FR-A- 519 743
- GB-A- 469 329
- GB-A- 703 777

## Beschreibung

Der Stand der Technik zu dem Schiffsantrieb mit einem Gondelpropeller (Produktname "Azipod") ist ausführlich beschrieben in dem Vortrag vom 3.3.95 von Mikko Niini

"The Need for Enhanced Manoeuvrability" gehalten auf der Seatrade Cruise Shipping Conference in Miami. Er beschreibt den Azipod als den Schiffsantrieb der Zukunft, der nur noch verbessert werden könne durch Kontrapropeller an jedem Ende der Gondel, wodurch der hydrodynamische Wirkungsgrad um bis 15% verbessert werden könne. Die praktische Realisierung fehle jedoch noch(s. Seite7).

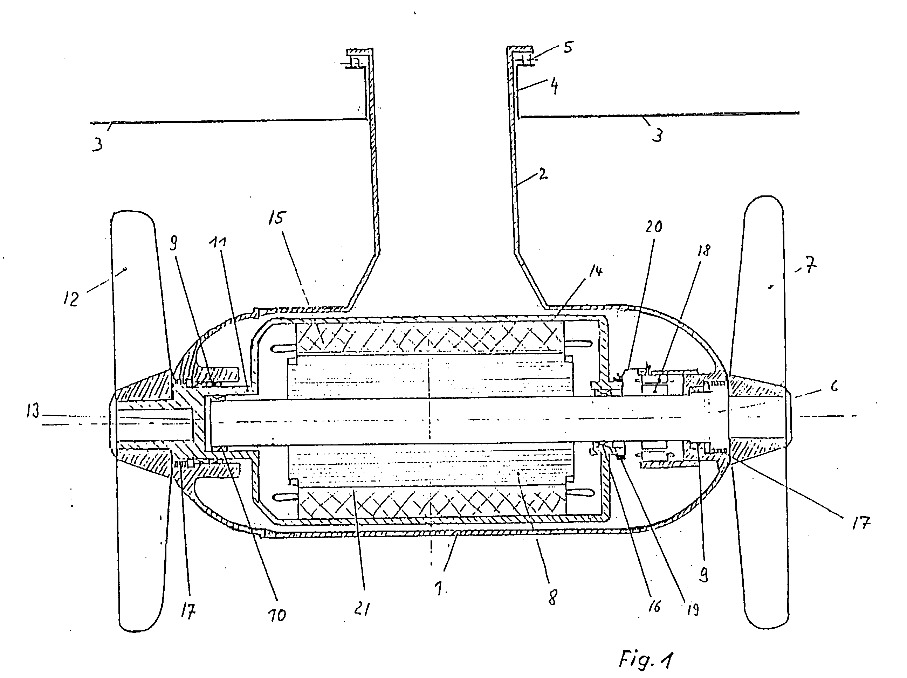

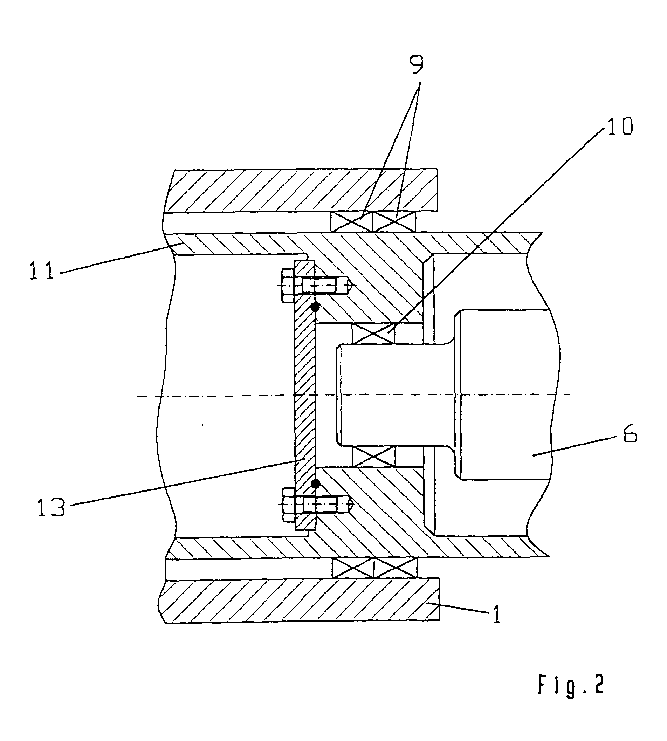

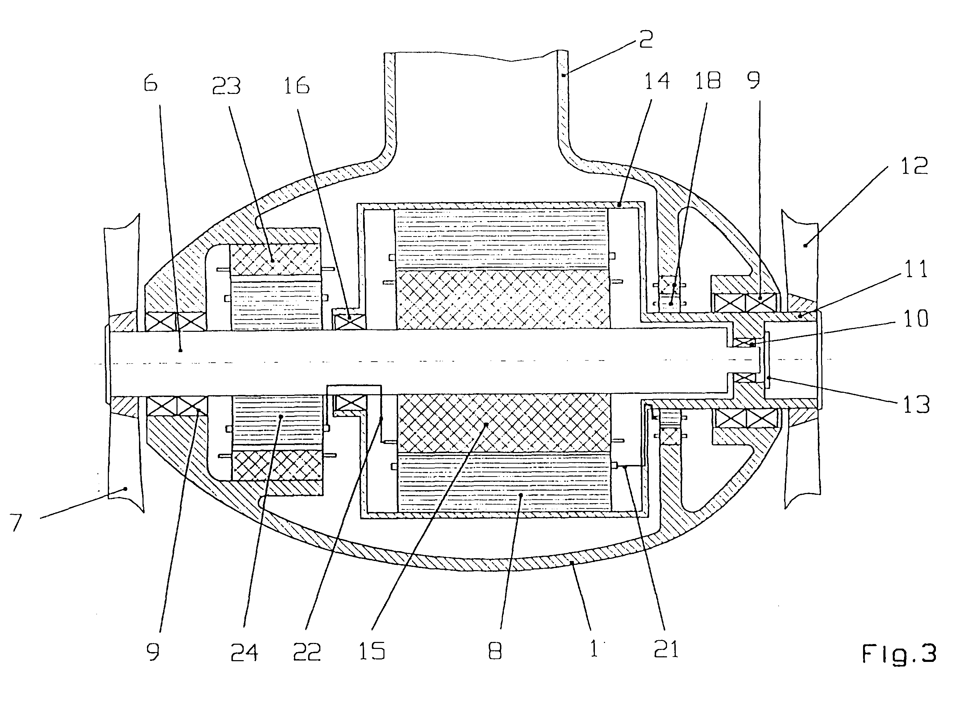

Eine Lösung des Problems wird in der beigefügten Ansichtszeichnung und den Patentansprüchen1.bis 12 dargelegt. Der Azipod hat jedoch nicht nur Vorteile. Nachteilig ist z.B. das hohe Gewicht und der große Gondeldurchmesser,die nicht leichte Aufhängung der schweren Gondel , der tiefliegende Gewichtsschwerpunkt und die damit verbundenen hohen Drehmomente durch Ruder- und Schubkräfte, die im Achterschiff aufgenommen werden müssen.
Diese Probleme sollen ebenfalls durch die erfindungsmäßige Lösungvermindert werden. Der im folgenden genannte" Contrapod " ist beispielhaft inder Vereinfachten Schnittzeichnung dargestellt. Wie bekannt bei Azipod wird hier eine Gondel 1 mit einem stromlinienförmigen Hohlsteg 2 durch einen vertikalen Schacht 4 durch den Schiffsrumpf 3 geführt und auf einen Schub- und Drehmoment- aufnehmenden Laufkranz 5 drehbar aufgehängt. Die Gondel erhält zum Propellerantrieb auch eine Induktionsmaschine,die eine Asynchron-,eine Gleichstrom- oder eine 3- oder Mehrphasen-Sychronmaschine(permanent- oder fremderregt) sein kann.
Erfindungsgemäß werden anstelle einer Propellerachse zwei Achsen angeordnet. Eine Welle6 erhält einen Propeller 7 und wird vom Rotor 8 angetrieben (Rotorpropeller 7, Rotorachse6 ). Die Achse erhält ein Schub- und Traglager 9 zum Gondelgehäuse 1 und ein zweites Traglager 10, das in der Hohlwelle 11 angeordnet ist.
Diese Hohlwelle bildet die Achse des Kontrapropellers 12 . Die Hohlwelle 11 ist durch eine Wand oder dichte Scheibe 13 gegen Eindringen von Wasser abgedichtet und kraftschlüssig mit dem Statorgehäuse 14 und dem Stator 15 verbunden. Die Hohlwelle wird Statorachse 11 genannt.
Auf der Rotorpropellerseite wird die Statorachse und damit das Statorgehäusel 4 auf der Rotorachse 6 durch ein Traglager 16 zentriert und fixiert. Die Abdichtung des Gondelinnern zum umgebenden Wasser wird durch Stopfbuchsen 17 an den Gondelenden erreicht.
Das System funktioniert auch,wenn Stator 15 gegen Rotor 8 vertauscht angeordnet ist. Man wird vorzugsweise die geringere Schwungmasse,d.h.den Rotor außen anordnen (Außenpoltyp).
Vorzugsweise wird man als Induktionsmotor einen fremderregten Synchronmotor wählen als bürstenlose Maschine, d.h. mit induktiver Erregerstromübertragung 18 .Für eine Drehzahlregelung der Propeller ist eine Umrichtereinspeisung des Statorstromes vorzusehen. Sie erfogt über Schleifringe 19 und Bürsten 20. Es müssen beide Drehzahlen gemessen werden(für Stator und Rotor).
Die Spannung des Motors wird über den Erregerstromumrichter immer so eingestellt.daß sie im Mittel proportional der Summe der Absolutwerte der Istdrehzahlen von Rotor und Stator ist.
Die Propeller sollten durch Modellversuche im Schleppkanal untersucht werden und so ausgelegt werden,daß sie bei gleichem Drehmoment optimalen Schub in Vorausfahrt erzeugen, aber auch ein gutes Stoppen ermöglichen. Eine Drehzahlregelung erfolgt nach der Solldrehzahl für einen Propeller,möglich st für den mit der höchsten Nenndrehzahl. Bei Seegang oder Ruderlegen kann sich eine Drehzahl auf Kosten der anderen erhöhen, damit ist immer optimaler Schub gegeben und die Kavitationsgefahr vermindert.
Die Propeller ,Stator und Rotor sollen daher in einem notwendigen Bereich überdrehzahlfähig sein (n_{ü}).
Bei Haverie oder Einwirkungen, die einen Propeller mehr oder weniger abstoppen können, wird der andere in Uberdrehzahl gehen. Damit n_{ü} nicht überschritten wird,werden beide Drehzahlen erfasst und eine Drehzahlgrenze n_{gr} vorgesehen ( n_{gr} kleiner n_{ü} ). Ist n_{gr} erreicht, erfolgt durch den Umrichter eine Stromrespektive Drehmomentbegrenzung.
Bei einer ernsten Haverie eines Propellers (Blatt oder Propeller ganz verloren) oderbei einem defekten Schub- oder Traglager 9 oder 10 könnte eine vorgesehene Arretiereinrichtung(z.B. Bremse) die Stator- oder Rotorachse festsetzen. Der Antrieb könnte bei halber Spannung mit halber Leistung weiterbetrieben werden. Welche Vorteile hat der Contrapod gegenüber dem Azipod?
= Gewichts- und Vollumenverkleinerung ummehr als 50% Dies resultiert einerseits daraus.daß die Relativdrehzahl zwischen Stator und Rotor beim Contrapod doppelt so groß ist als beim Azipod bei gleicher Propellerdrehzahl. Bei gleicher Leistung kann das Drehmoment und damit annähernd das Gwicht des Contrapod halbiert werden. Auch wenn ein zusätzliches rotierendes Motorgehäuse untergebracht werden muß, ergibt sich eine weitere Leistungsreduzierung durch den besseren elektrischen und hydrodynamischen Wirkungsgrad des Condrapod.
= Strömungsmäßig besseres Längen/Breitenverhält-nis der Gondel. Der Durchmesser großer Drehstrommotore wird durch die erforderliche Mindestpolbreite (ca.250mm) bestimmt. Da hier die Polzahl halbiert ist,wird eine schlankere Gondel möglich.
= Geringerer Tiefgang für größte Schiffe möglich. Bei gleicher Schubbelastung der Propeller beider Systeme könnte der Propellerdurchmesser und damit der notwendige Tiefgang beim Contrapod um ca. 30% geringer sein.
= Geräuscharmer Schiffsantrieb.
   Da es kein Fundament für den Motor des Contrapod gibt, haben Drehmomentenerzeugung des Motors als Oberschwingungen keinen Einfluß auf das Schiff.
   Des weiteren werden Propellerblattauswirkungen auf die Außenhaut des Schiffes halbiert durch 2 Propeller.
   Schließlich wird die Kavitation bei dynamischen, z.B. Seegangseinflüssen durch die Drehzahlanpassung der beiden Propeller vermieden.
= Wirkungsgradverbesserung um maximal 17 %. Dies ergibt sich aus:
   - Hydrodynamisch durch die Kontrapropeller um 14%
   - Durch die schlankere Gondel: 1 %
   - Durch den besseren Motorwirkungsgrad: 2 %
= Redundanz-Antrieb zu 50 % für Propeller- oder Lagerausfall. Die betreffende Popellerachse kann arretierbar gemacht werden.
Bei contrarotierenden Propellern (CRP) ,die hintereinander angeordnet sind (DE 4234584A1 und DE A 1248503),ist die Lagerung und Abdichtung der massiven Innenwelle in der Hohlwelle der kritische Punkt der CRP-Anlage.
Damit dabei nicht unterschiedliche Durchbiegungen der Wellen mit den dabei auftretenden Lager- und Abdichtproblemen auftreten, muß die innere Welle größer als vom Drehmoment her erforderlich gewählt werden.
Die erfindungsgemäße Lösung nach Ansprüche 1. und 2. machen das Problem unkritisch und ermöglichen mit dem Unteranspruch 11. eine erleichterte Montage und Wartung dieser Lagerung 10 und Abdichtung des von außen abschraubbaren Dichtungsdeckels 13 (Fig.2).
Die unerwünschten wartungsbehafteten Schleifringe 19 können entfallen,wenn man nach Fig.3 eine Asynchronmaschine mit ihrem Rotor 24 auf eine der rotierenden Wellen, hier die Innenwelle 6 setzt und den Stator 23 in das Gondelgehäuse 1 anordnet. Die Polzahl der Asynchronmaschine sollte gering sein (2 bis 4-polig) gegenüber der vielpoligen Synchronmaschine. Bei einem Schlupf kleiner 1 (motorisch treibend) wird dann ein geringer Teil mechanische Leistung auf die Welle 6 gebracht. Die überwiegende Schlupfleistung wird dann über die feste Leitung 22 vom Rotor 24 der As-Maschine zum Stator 15 der Synchronmaschine geführt.

Um die Maschinen klein zu halten, sollte der Hauptteil der Blindleistung der As-Maschine von Kondensatoren aufgebracht werden.
Erfindungsgemäß wird nach Fig.3 der As-Maschinenrotor 24 nicht auf die Hohlwelle 11 ,sondern auf die innere Welle 6 gesetzt und dem hinteren Propeller 7 zugeordnet, da einerseits die Leistung des hinteren Propellers erhöht wird und andererseits der Durchmesser der As-Maschine kleiner gehalten werden kann. Durch diese festgelegte Anordnung der Maschinen wird die für die Erhöhung desGesammtgütegrads derCRP-Anlage erwünschte Vergrößerung der Leistung des hinteren Propellers ermöglicht. Die erforderliche höhere Drehzahl des hinteren gegenüber dem vorderen Propeller wird durch entsprechende Wahl ihrer Steigungen erreicht.
Da der hintere Propeller seine Wirkungsgradverbesserung u.a. aus der Rückgewinnung der Drallenergie des vorderen Propellers erhält, aber möglichst nicht in die Endwirbel der Flügel des vorderen Propellers hineinreichen sollte, wird der Durchmesser des hinteren Propellers auf etwa 80 bis 95% des vorderen ausgelegt.
Die Verminderung der Leistung der Synchronmaschine auf Kosten der As-Maschine um deren mechanische Leistung beträgt je nach dem Schlupf ca.5 bis 20%. Da der Leistungsanteil der Synchronmaschine den Gondeldurchmesser bestimmt, liegt auch in der Leistungsaufteilung eine Möglichkeit der Wirkinngsgradoptimierung der CRP-Anlage.
Der Contrapod wird zu einer verschleißfreien CRP-Anlage, wenn auch für die Erregerleistung eine induktive Übertragung eingesetzt wird. Wenn man diese Übertragereinrichtung 18 auf die Hohlwelle 11 vor das Synchronmotorgehäuse 14 setzt und durch dieses die Zuführung 21 Zum Polrad führt, hat man eine Gesamtanordnung der Maschinen,die erfindungsgemäß eine stromlinienförmige Tropfenform zur Hauptanströmrichtung des Gondelgehäuses 1 erlaubt.
Wie vorher beschrieben, ist bei Propeller- oder Lagerschaden nach Arretierung des einen rotierenden Systems ein Notbetrieb mit dem verbleibenden System möglich.
Durch die schleifringlose Energieübertragung auf das Propellersystem wird die Baugröße der Gondel etwas größer, aber eine Reduktion der optimierten Baugröße auf 55 bis 60% gegenüber dem Stand der Technik (Azipod) ist trotzdem erreichbar.
Der elektrische Wirkungsgrad des neuartigen Gondelantriebes ist nicht größer als derdes bisherigen, da die niederpolige AS-Maschine einen sehr hohen Wirkungsgrad hat und durch ihren eigenen Leistungsanteil von 5-20% die Größe der Synchronmaschine verringert. Diese wiederum hat eine hohe Ausnutzungsziffer (geringere Polzahl) einen guten Wirkungsgrad.
Durch die problemlose Aufteilung der Leistung der Gesamtanlage auf die Propeller- im wesentlichen durch die Wahl ihrer Steigung und damit ihrer Drehzahlen - ist eine Wirkungsgradoptimierung der Propulsion möglich.

Nach K.H.Paetow "Schiffsantriebssysteme mit gegenläufigen Propellern..."- Vortrag der Schiffbautechnischen Gesellschaft bei der Hauptversammlung '95 in Hamburg ergibt sich bei der Aufteilung der Leistung auf vorderen zu hinterem Propeller von 30 zu 70% und der Drehzahl von 1:2 ein Propulsionsgewinn von 9% gegenüber einem optimierten Einzelpropeller eines Containerschiftes Diese Verhältnisse sind mit dem beschriebenen Contrapropellersystem (Contrapod) leicht zu erreichen.

## Patentansprüche

1. Eine Propelleranlage mit einer Gondel, die in einem vertikalem Tunnel fest oder drehbar befestigt ist und sich mit einem strömungstechnisch verkleideten Steg verbunden unter einem Schiffsboden befindet und die eine Synchromaschine enthält, dadurch gekennzeichnet, daß an jedem Ende der Gondel ein kontrarotierender Propeller angeordnet ist, wobei der eine Propeller mit dem Rotor auf einer Achse (Rotorachse) und der Kontrapropeller mit dem Stator auf einer koachsialen Welle (Statorachse) kraftschlüssig befestigt sind (Innenpolmotortype), daß die Rotorachse im Gondelgehäuse durch ein Trag- und Schublager fixiert ist und daß das zweite Traglager sich in der Hohlwelle des Stators befindet, daß die Statorhohlwelle zum Propeller hin abgedichtet ist, zum Gondelgehäuse ein Trag- und Schublager hat und kraftschlüssig mit dem Statorgehäuse verbunden ist und dieses auf der Rotornropellerseite durch das zweite Traglager auf der Rotorachse zentrisch fixiert ist und daß jede Achse mit einer Stopfbuchse zum Gehäuse gegen Wassereinbruch abgedichtet ist.

2. Nach 1., dadurch gekennzeichnet, daß in der Gondel Rotor und Stator vertauscht sind (Außenpoltype der Synchronmaschine).

3. Nach 1. und 2., dadurch gekennzeichnet, daß die Propeller in ihrer Steigung, Durchmesser und Form so ausgelegt sind, daß sie bei Nennanströmung in Vorwärtsrichtung bei gleichem Drehmoment optimalen Propulsionswirkungsgrad haben.

4. Nach 1., bis 3., dadurch gekennzeichnet, daß am Statorgehäuse eine Arretiermöglichkeit (z.B. Bremse) vorgesehen ist und bei Arretierung des Stators der Antrieb des Rotorpropellers mit annähernd halber Speisespannung erfolgt.

5. Nach 1., bis 4., dadurch gekennzeichnet,daß der Motor eine fremd- oder permanenterregte Synchronmaschine ist.

6. Nach 5., dadurch gekennzeichnet,daß bei einer fremderregten Synchronmaschine der Erregerstrom induktiv auf das Polrad und der Statorstrom über Schleifringe zum Stator übertragen wird und von Umrichter geliefert wird.

7. Nach 1., bis 6., dadurch gekennzeichnet,daß die erforderliche Spannung für den Motor annähernd proportional zu der Summe der absoluten Werte der Istdrehzahlen von Rotor und Stator gestellt wird.

8. Nach 1., bis 5., dadurch gekennzeichnet,daß auch für die Rotorachse im Haveriefall eine Arretiermöglichkeit vorhanden ist.

9. Nach 1., bis 8., dadurch gekennzeicnnet, daß der die Hohlwelle zum Lager der Vollwelle abdichtende Deckel von der Propellerseite der Hohlwelle montierbar ist.

10. Nach 1. bis 5., und 7., bis 9., dadurch gekennzeichnet, daß die gegenläufige vielpolige Synchronmaschine ihren Statorstrom von einem auf einer dei beiden rotierenden Wellen sitzenden Rotor einer niederpoligen ,vorzugsweise zwei- oder vierpoliger Asynchronmaschine erhält, wobei dessen Stator in dem Gondelgehäuse befestigt ist, daß die Aufnahmeleistung der As-Maschine in einen mechanischen und einen weit größeren elektrischen Anteil aufgeteilt ist, der als Rotorstrom der As-Maschine über eine Leitung an den Stator der Synchronmaschine gegeben wird.

11. Nach 10., dadurch gekennzeichnet,daß der in Vorausfahrt vordere Propeller auf der Hohlwelle sitzt und von dem Rotor der Synchronmaschine angetrieben wird, daß daher der hintere Propeller die größere Leistung besitzt und von der Asynchronmaschine und dem Stator der Synchronmaschine über die Vollachse angetrieben wird und daß die Übertragung der Erregerleistung induktiv oder durch Schleifringe zur Hohlwelle und über Leitungen zu den Polwicklungen der Synchronmaschine erfolgt.

12. Nach 11., dadurch gekennzeichnet, daß der vordere Propeller größer ist und langsamer dreht als der hintere und daß das Gehäuse durch die gewählte Anordnung der Maschinen stromlinienförmig-in Tropfenform- zur Hauptanströmung ausgeführt wird.

## Claims

1. A propeller installation with a pod, which is firmly or torsionally connected in a vertical tunnel and is located, connected to a fin with a streamlined fairing, under the bottom of a ship and which contains a synchronous machine, characterised in that a counter-rotating propeller is arranged at each end of the pod, one propeller being non-positively connected to the rotor on one shaft (rotor shaft) and the counter-propeller being connected to the stator on a coaxial shaft (stator shaft) (internal pole motor type), in that the rotor shaft is fixed in the pod casing by a journal bearing and thrust bearing and in that the second journal bearing is located in the hollow shaft of the stator, in that the stator hollow shaft is sealed towards the propeller, has a journal bearing and thrust bearing relative to the pod casing and is non-positively connected to the stator casing and the latter is centrally fixed on the rotor shaft on the rotor propeller end by the second journal bearing and in that each shaft is sealed relative to the casing against the entry of water by a gland.

2. Propeller installation according to Claim 1, characterised in that the rotor and stator are interchanged in the pod (external pole type of synchronous machine).

3. Propeller installation according to Claims 1 and 2, characterised in that the pitch, diameter and shape of the propeller are designed in such a way that they have optimum propulsive efficiency during nominal incident flow in the forward direction for the same torque.

4. Propeller installation according to Claims 1 to 3, characterised in that a locking possibility (for example brake) is provided on the stator casing and, when the stator is locked, the drive of the rotor propeller takes place with approximately half the supply voltage.

5. Propeller installation according to Claims 1 to 4, characterised in that the motor is an externally excited or permanently excited synchronous machine.

6. Propeller installation according to Claim 5, characterised in that in the case of an externally excited synchronous machine, the excitation current is inductively transmitted to the pole wheel and the stator current is transmitted via slip rings to the stator and is supplied from static frequency changer.

7. Propeller installation according to Claims 1 to 6, characterised in that the required voltage for the motor is set approximately proportional to the sum of the absolute values of the actual rotational speeds of the rotor and stator.

8. Propeller installation according to Claims 1 to 5, characterised in that a locking possibility is also present for the rotor shaft in the case of sea-damage.

9. Propeller installation according to Claims 1 to 8, characterised in that the cover sealing the hollow shaft relative to the bearing of the solid shaft can be fitted from the propeller end of the hollow shaft.

10. Propeller installation according to Claims 1 to 5 and 7 to 9, characterised in that the counter-rotating multi-pole synchronous machine obtains its stator current from a rotor, seated on one of the two rotating shafts, of a low-pole, preferably two-pole or four-pole asynchronous machine, its stator being fastened in the pod casing, in that the power accepted by the asynchronous machine is subdivided into a mechanical proportion and a much larger electrical proportion, which is supplied as the rotor current of the asynchronous machine via a lead to the stator of the synchronous machine.

11. Propeller installation according to Claim 10, characterised in that, when going ahead, the forward propeller is seated on the hollow shaft and is driven by the rotor of the synchronous machine, in that the rear propeller therefore has a larger power and is driven by the asynchronous machine and the stator of the synchronous machine via the solid shaft and in that the transmission of the excitation power takes place inductively or by slip rings to the hollow shaft and via leads to the pole windings of the synchronous machine.

12. Propeller installation according to Claim 11, characterised in that the forward propeller is larger than and rotates more slowly than the rear propeller and in that, due to the selected arrangement of the machines, the casing has a streamlined droplet shape relative to the principal incident flow.

## Revendications

1. Dispositif à hélices comprenant un fuseau, qui est monté de manière fixe ou de manière à pouvoir tourner dans un tunnel vertical et qui, assemblé à une traverse munie d'un revêtement adapté à la technique des fluides, est situé sous le fond de cale et qui contient un moteur synchrone, caractérisé en ce qu'à chaque extrémité du fuseau est disposée une hélice à rotation inverse, l'une des hélices étant fixée avec le rotor par adhérence sur un axe (axe du rotor) et l'hélice à rotation inverse étant fixée avec le stator par adhérence sur un arbre coaxial (axe du stator), en ce que l'axe du rotor est fixé dans le carter du fuseau au moyen d'un palier de poussée et d'appui et en ce que le deuxième palier d'appui est monté dans l'arbre creux du stator, en ce que l'arbre creux du stator est rendu étanche du côté de l'hélice et est muni d'un palier de poussée et d'appui du côté du carter du fuseau et est assemblé par adhérence avec le carter du stator et celui-ci, du côté de l'hélice du rotor, est fixé au centre de l'axe du rotor par l'intermédiaire du deuxième palier d'appui et en ce que chaque axe est rendu étanche à la pénétration de l'eau du côté du carter au moyen d'un presse-étoupe.

2. Dispositif à hélices selon la revendication 1, caractérisé en ce que le rotor et le stator peuvent être permutés à l'intérieur du fuseau (moteur synchrone de type à pôles extérieurs).

3. Dispositif à hélices selon les revendications 1 et 2, caractérisé en ce que les hélices sont conçues avec un pas hélicoïdal, un diamètre et une forme, de telle sorte qu'elles présentent un rendement de propulsion optimal en cas de poussée nominale en sens avant avec un couple de rotation identique.

4. Dispositif à hélices selon l'une quelconque des revendications 1 à 3, caractérisé en ce qu'il est prévu une possibilité de blocage (telle qu'un frein) sur le carter du stator et, en cas de blocage du stator, l'hélice du rotor est propulsée avec approximativement la moitié de la tension d'alimentation.

5. Dispositif à hélices selon l'une quelconque des revendications 1 à 4, caractérisé en ce que le moteur est un moteur synchrone à excitation indépendante ou à excitation permanente.

6. Dispositif à hélices selon la revendication 5, caractérisé en ce que, en présence d'un moteur synchrone à excitation indépendante, le courant d'excitation est transmis de manière inductive sur la roue polaire et le courant du stator est transmis vers le stator par l'intermédiaire de bagues collectrices et est fourni par le convertisseur de fréquence.

7. Dispositif à hélices selon l'une quelconque des revendications 1 à 6, caractérisé en ce que la tension nécessaire au moteur est pratiquement proportionnelle à la somme des valeurs absolues des vitesses de rotation réelles du rotor et du stator.

8. Dispositif à hélices selon l'une quelconque des revendications 1 à 5, caractérisé en ce qu'il est également prévu une possibilité de blocage de l'axe du rotor en cas d'avarie.

9. Dispositif à hélices selon l'une quelconque des revendications 1 à 8, caractérisé en ce que le couvercle, par lequel l'arbre creux est rendu étanche du côté du palier de l'arbre plein, peut être monté par le côté de l'hélice de l'arbre creux.

10. Dispositif à hélices selon l'une quelconque des revendications 1 à 5 et 7 à 9, caractérisé en ce que le courant du stator du moteur synchrone à plusieurs pôles et tournant en sens inverse est fourni par un rotor, logé sur l'un des deux arbres rotatifs, d'un moteur asynchrone avec un faible nombre de pôles, de préférence à deux ou quatre pôles, le stator de celui-ci étant fixé dans le carter du fuseau, en ce que la puissance d'absorption du moteur asynchrone est divisée en une part mécanique et une part électrique qui est nettement plus importante et qui, en tant que courant du rotor du moteur asynchrone, est transmis par l'intermédiaire d'un câble vers le stator du moteur synchrone.

11. Dispositif à hélices selon la revendication 10, caractérisé en ce que l'hélice avant, par référence à la marche dans le sens avant, est située sur l'arbre creux et est actionnée par le rotor du moteur synchrone, en ce que, de ce fait, l'hélice arrière possède la plus grande puissance et est actionnée par le moteur asynchrone et par le stator du moteur synchrone par l'intermédiaire de l'arbre plein, et en ce que la puissance d'excitation est transmise de manière inductive ou au moyen des bagues collectrices vers l'arbre creux et par l'intermédiaire de câbles vers les enroulements de pôles du moteur synchrone.

12. Dispositif à hélices selon la revendication 11, caractérisé en ce que l'hélice avant est plus grande et tourne plus lentement que l'hélice arrière et en ce que, en raison de la disposition choisie pour les moteurs, le carter est exécuté avec un profil caréné selon une forme ovoïdale par rapport à la poussée principale.
